(19) Europäisches Patentamt
European Patent Office
Office européen des brevets

(11) **EP 4 009 480 B1**

(12) **FASCICULE DE BREVET EUROPEEN**

(45) Date de publication et mention
de la délivrance du brevet:
**24.05.2023 Bulletin 2023/21**

(21) Numéro de dépôt: **21211933.3**

(22) Date de dépôt: **02.12.2021**

(51) Classification Internationale des Brevets (IPC):
*H02J 7/00* *(2006.01)*    *H01M 10/44* *(2006.01)*
*H01M 10/48* *(2006.01)*    *B60L 58/13* *(2019.01)*
*B60L 58/16* *(2019.01)*

(52) Classification Coopérative des Brevets (CPC):
**H02J 7/0048; B60L 58/13; B60L 58/16;**
**H01M 10/44; H01M 10/48; H02J 7/005;**
**H02J 7/00712;** B60L 2240/80; B60L 2250/12;
Y02E 60/10; Y02T 10/70

(54) **PROCÉDÉ DE GESTION DE L'ÉTAT DE CHARGE D'UN ACCUMULATEUR POUR UN VIEILLISSEMENT OPTIMISÉ**

VERFAHREN ZUR STEUERUNG DES LADEZUSTANDS EINES AKKUMULATORS FÜR EINE OPTIMIERTE ALTERUNG

METHOD FOR MANAGING A STATE OF CHARGE OF AN ACCUMULATOR TO ENSURE OPTIMIZED AGEING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2020 FR 2012612**

(43) Date de publication de la demande:
**08.06.2022 Bulletin 2022/23**

(73) Titulaire: **Commissariat à l'Energie Atomique et aux Energies Alternatives**
**75015 Paris (FR)**

(72) Inventeurs:
• **KLEIN, Jean-Marie**
**38054 GRENOBLE Cedex 09 (FR)**
• **TESSARD, Romain**
**38054 GRENOBLE Cedex 09 (FR)**
• **VINIT, Laurent**
**38054 GRENOBLE Cedex 09 (FR)**

(74) Mandataire: **Atout PI Laplace**
**Immeuble "Visium"**
**22, avenue Aristide Briand**
**94117 Arcueil Cedex (FR)**

(56) Documents cités:
FR-A1- 3 025 663    US-A1- 2011 156 644
US-A1- 2011 221 400    US-A1- 2013 027 048
US-A1- 2017 176 544

**Description**

Le domaine technique de l'invention est celui des accumulateurs tels que des accumulateurs Li-ion. La présente invention concerne plus particulièrement un procédé permettant la gestion de l'état de charge d'un tel accumulateur, dans l'objectif d'en limiter la dégradation et d'en augmenter la durée de vie dans un fonctionnement où ledit accumulateur a été surdimensionné.

Les accumulateurs ou accumulateurs lithium - dans leurs différentes variantes telles que les accumulateurs « lithium-ion », « lithium-ion-polymère », « lithium-métal-polymère » etc... - sont les accumulateurs présentant une des plus grandes densités d'énergie et une des plus grandes énergies spécifiques. Il s'agit donc de la technologie de choix pour l'alimentation de nombreuses applications (véhicules électriques ou hybrides, dispositifs portables etc...).

Cependant, il est connu que ces accumulateurs, encore dénommés couramment batteries, présentent une dégradation de leurs performances - et notamment de leur capacité et résistance - au cours du temps, et cela même pendant les périodes de non utilisation. Par conséquent, la prise en compte de l'évolution prévisionnelle des performances des accumulateurs présente de nombreux avantages à différents niveaux au sein d'un système (dimensionnement, maintenance, stratégies de pilotage, etc...).

La présente invention propose de s'intéresser à la prise en compte de la dégradation vis-à-vis de la stratégie de pilotage de l'accumulateur.

De manière générale, les performances des accumulateurs peuvent être déterminées grâce à la mise en place d'indicateurs tels que le paramètre d'état de santé, couramment dénommé "SOH" pour "State Of Health", calculé via les signaux physiques mesurés directement sur l'accumulateur.

De manière générale, on considère également que l'état de charge également appelé SOC d'un accumulateur est défini par l'équation (1) :

$$SOC(i + 1) = SOC(i) + \frac{I \cdot \Delta t}{C_{ref}} \qquad \text{(eq 1)}$$

avec :

- I : courant ayant circulé entre i et i+1 en [A] ;
- $C_{ref}$ : capacité de l'accumulateur en [Ah] à l'instant i ;
- $\Delta t$ : durée entre i et i+1 en [h].

La capacité $C_{ref}$ de l'accumulateur est calculée par l'équation 2.

$$C_{ref} = C_{nom} \cdot SOH \qquad \text{(eq 2)}$$

Avec :

- SOH : « State of Health » : état de santé de l'accumulateur ;
- $C_{nom}$ : capacité initiale de l'accumulateur en [Ah].

Les fabricants d'accumulateurs précisent généralement des limites d'utilisation en tension [V] au-delà desquelles il n'est pas recommandé d'utiliser l'accumulateur. Ces limites peuvent être appelées $U_{min}$ (limite basse) et $U_{max}$ (limite haute).

Au niveau du pack accumulateur comprenant un ensemble d'accumulateurs, certains fabricants précisent également des limites d'état de charge minimale et maximale qui permettent notamment de limiter la dégradation de l'accumulateur au cours de son utilisation, respectivement référencées $SOC_{min}$ et $SOC_{max}$.

En règle générale, le dimensionnement initial de l'accumulateur est fait de telle sorte qu'il puisse assurer sa fonction même après un certain nombre d'années d'utilisation. Le dimensionnement initial prend donc en compte un facteur de vieillissement pour une durée de vie déterminée et en début de vie, l'accumulateur est donc surdimensionné par rapport au besoin d'énergie.

Par ailleurs et sans système de gestion optimale, l'accumulateur est généralement ramené en permanence à pleine charge après utilisation d'où un fonctionnement global à haut état de charge. Or il est connu que cette façon de procéder a pour conséquence de provoquer un vieillissement prématuré et donc une perte de capacité accrue de l'accumulateur.

Pour limiter ce type de vieillissement plusieurs approches ont été proposées :

Ainsi le document US 2004/0066171 A1 décrit un procédé pour ajuster l'état de charge d'un accumulateur équipant un appareil mobile tel qu'un téléphone portable, un ordinateur portable ou un appareil photo numérique, en fonction de l'emploi du temps de l'utilisateur de l'appareil. En particulier, l'accumulateur est complètement chargé lorsqu'il est prévu un besoin élevé d'autonomie. Inversement, l'accumulateur est placé dans un état de charge plus faible lorsqu'il est prévu de connecter l'appareil à une source d'alimentation externe. Cette approche est intéressante mais nécessite de connaitre à l'avance l'usage. Dans cette demande de brevet l'accumulateur est dimensionné pour satisfaire un usage maximal et va vieillir entrainant une autonomie de plus en plus faible. De sorte que le service rendu en début et en fin de vie n'est pas identique.

Les documents FR 3025663 A1, US 2011/221400 A1, US 2011/156644 A1 et US 2013/027048 A1 décrivent tous un procédé de gestion d'une plage d'utilisation autorisée d'une batterie (ou accumulateurs), en particulier pour l'utilisation de ces batteries dans des véhicules électriques, hybrides et/ou hybrides rechargeables.

La demande de brevet WO2019121756 vise à répondre au besoin en proposant un procédé de gestion d'un état de charge d'un accumulateur laissé au repos et subissant des pertes de capacité au cours du temps. Là encore une partie du problème semble résolu mais d'une part l'accumulateur est laissé au repos la plupart du temps avec des cyclages très périodiques et d'autre part le procédé de gestion décrit nécessite d'avoir recours à un certain nombre d'étapes de caractérisation répétées périodiquement.

Dans ce contexte et pour résoudre les problèmes précités et notamment le fait qu'un accumulateur soumis à un profil électrique de sollicitation non pourvu d'une gestion ou stratégie d'utilisation risque un vieillissement prématuré et/ou de faire défaut au cours de son utilisation, la présente invention a pour objet une méthode permettant la prise en compte de l'état de santé d'un accumulateur dans la gestion d'un seuil d'état de charge (ou d'un seuil d'état d'énergie) haut maximal d'utilisation de l'accumulateur $SOC_{max}$ ($SOE_{max}$) afin de mettre en place une gestion optimale permettant d'assurer le service rendu par l'accumulateur tout en minimisant sa dégradation. En effet, la même démarche inventive peut être conduite à partir du paramètre d'état de charge SOC ou à partir du paramètre d'état d'énergie SOE.

Plus précisément, la présente invention a pour objet un procédé selon les revendications indépendantes 1 et 5. D'autres modes de réalisation sont définis dans les revendications dépendantes.

D'autres caractéristiques et avantages de l'invention apparaîtront à l'aide de la description qui suit, faite en regard de figures annexées qui représentent :

[FIG.1] illustre un exemple de profil d'usage du paramètre d'état de charge SOC en fonction du temps dans le cas d'un accumulateur non sur-dimensionné ;

[FIG.2] illustre un exemple de profil d'usage du paramètre d'état de charge SOC en fonction du temps dans le cas d'un accumulateur surdimensionné ;

[FIG.3] illustre un exemple de profil de vieillissement en fonction du paramètre d'état de charge SOC ;

[FIG.4] illustre le même exemple de profil de vieillissement en fonction du paramètre d'état de charge SOC que celui illustré en figure 3 et mettant en évidence le paramètre $SOC_{max-user}$ minimum préalablement défini et le paramètre $SOC_{max-user}$ maximum préalablement défini ;

[FIG.5] illustre le même exemple de profil de vieillissement en fonction du paramètre d'état de charge SOC que celui illustré en figure 4 et mettant en évidence le paramètre $SOC_{max-user}$ choisi ;

[FIG.6] illustre un exemple de profil d'usage du paramètre d'état de charge SOC en fonction du temps, ledit paramètre SOC étant borné par un paramètre $SOC_{max-user}$ préalablement déterminé;

[Fig.7] illustre un exemple de résultat de simulation sur un profil journalier dans le cadre d'un système fonctionnant entre 100% et 50% de SOC et d'un fonctionnement classique sans gestion particulière:

[Fig.8] illustre le résultat de simulation répété sur une année d'utilisation de l'accumulateur du même profil journalier que celui illustré en FIG.7;

[Fig.9] illustre le résultat de simulation sur un profil annuel avec un SOC bridé 15% < SOC < 65% ;

[Fig.10] illustre le résultat de simulation sur profil supérieur à un an obtenu avec le procédé de gestion de la présente invention.

Selon la présente invention, il est proposé de définir de manière évolutive au cours du temps la limite haute $SOC_{max}$ par l'équation (eq 3) ci-après :

$$SOC_{max}(t) = \min\left(SOC_{max\_user} + 100 - SOH(t), SOC_{max\_BMS}\right) \qquad \text{(eq 3)}$$

avec $SOC_{max\_user}$ : limite de SOC haute définie par l'utilisateur [%] selon l'application et l'usage prévu ;

$SOC_{max\_BMS}$ : limite de SOC haute définie dans le système de contrôle de l'accumulateur encore couramment dénommé « Battery Management System ou « BMS » en anglais et défini par le fabricant.

Avec SOH(t) : état de santé à l'instant t, correspondant au ratio de capacité restante à l'instant t/ capacité à l'instant initial.

Il est à noter que le même procédé de gestion peut être appliqué en utilisant l'état d'énergie "SOE" pour "State Of Energy". Les remontées d'informations ne sont dans ce cas plus liées aux Ah transités mais aux Wh transités. Il est ainsi proposé également de définir selon la présente invention un $SOE_{max}$ (t) par l'équation 4 suivante :

$$SOE_{max}(t) = min\ (SOE_{max\_user} + 100 - SOHE(t), SOE_{max\_BMS}) \qquad (eq\ 4)$$

Avec

$SOE_{max\_user}$ : limite haute de SOE, définie par l'application et l'usage [%] ;

$SOE_{max\_BMS}$ : limite haute de SOE, définie dans le système de contrôle de l'accumulateur encore couramment dénommé « Battery Management System ou « BMS » en anglais et défini par le fabricant ;

SOHE(t) : état de santé correspondant au ratio d'énergie restante à l'instant t/ énergie à l'instant initial.

Le paramètre SOH ou le paramètre SOHE peuvent être définis in situ par le « BMS ».
Par exemple, grâce à un compteur coulométrique, il est possible de remonter, sur un cycle complet, à la valeur de la capacité à l'instant t que l'on peut alors comparer à la valeur de la capacité en début de vie et ainsi remonter directement à l'état de santé.
Par ailleurs, l'analyse incrémentale de la capacité (ICA) est un outil visant à utiliser les variations de tension lors de la charge ou de la décharge pour suivre l'état interne de la cellule en traçant : $ICA(U_{cell})$ [Ah/V]= $dQ(U_{cell})$[Ah] / $dU_{cell}$ [V] avec Q la capacité de la cellule en Ah et $U_{cell}$ la tension de la cellule en V. Cette méthodologie peut être illustrée par les deux brevets suivants : FR1362456 et FR1362458.
Enfin, on peut aussi utiliser l'analyse différentielle de tension (DVA), méthode quasi équivalente à la précédente qui s'appuie sur le tracé de DVA(SOC) [V]= $dU_{cell}$(SOC)[V] / dSOC [%].
Il est à noter que la présente invention est intéressante si le système de stockage est surdimensionné. Dans le cas où l'application nécessiterait d'utiliser 100% de l'énergie accumulateur, le $SOC_{max}$ serait directement égal au $SOC_{max,BMS}$ et la gestion de l'accumulateur avec cette méthode serait équivalente à une gestion traditionnelle de l'accumulateur.
Il est à noter également que le paramètre $SOC_{max\_user}$ est à la fois fonction de l'application et de l'usage et est défini par le fabricant en début de vie.
Ce paramètre doit prendre en compte l'énergie nécessaire au bon fonctionnement de l'application. Au mieux ce paramètre $SOC_{max\_user}$ sera dimensionné pour que l'accumulateur puisse fournir en une fois l'énergie maximum que devra fournir l'accumulateur au cours de sa vie. Par ailleurs il doit aussi prendre en compte la possibilité de charge pour que chaque jour cette quantité maximale d'énergie puisse être restituée : par exemple dans le cas d'une recharge solaire, évaluer le nombre de jour sans soleil possible afin d'en tenir compte dans le choix de ce seuil. De manière générale on prend une marge de l'ordre de 10 à 15% de manière à ce qu'il reste de l'ordre de 10 à 15% d'énergie dans l'accumulateur une fois une décharge maximale réalisée.
Selon la présente invention, il convient de déterminer la valeur du paramètre SOCmax_user. Cette valeur est définie en amont de la mise en oeuvre de l'algorithme de gestion de la charge et reste fixée ensuite.
Cette valeur peut par exemple reposer sur la détermination préalable de plusieurs paramètres qui sont :

- le profil d'usage et plus particulièrement de la contrainte maximale en énergie/puissance de l'application afin de ne pas fixer une valeur trop faible et ainsi réduire le service proposé par l'application ;
- le surdimensionnement de l'accumulateur par rapport au besoin initial de l'application. Plus le surdimensionnement sera important plus la marge de manoeuvre pour fixer cette valeur sera importante ;
- la connaissance du vieillissement moyen par pas de SOC.

Exemple d'application dans lequel on détermine le paramètre $SOC_{max\ user}$:

Système stationnaire d'énergie appelé couramment : « Shiftinq »

Dans cette application on stocke de l'énergie à un moment donné afin de la restituer à un autre moment. Il peut par exemple s'agir d'un système autonome stockant en journée grâce à de l'énergie produite par des panneaux photovoltaïques et restituant cette énergie en soirée pour des besoins domestiques.

Afin de simplifier le concept, le Demandeur considère un exemple dans lequel le système se charge durant 12h et se décharge durant 12h par jour, le besoin journalier étant de 40 Ah et ce besoin étant constant.

Le Demandeur considère également que la ressource solaire est supérieure au besoin (ceci sous-entend que la charge n'est pas limitante et que chaque jour on peut charger les 40 Ah déchargés précédemment).

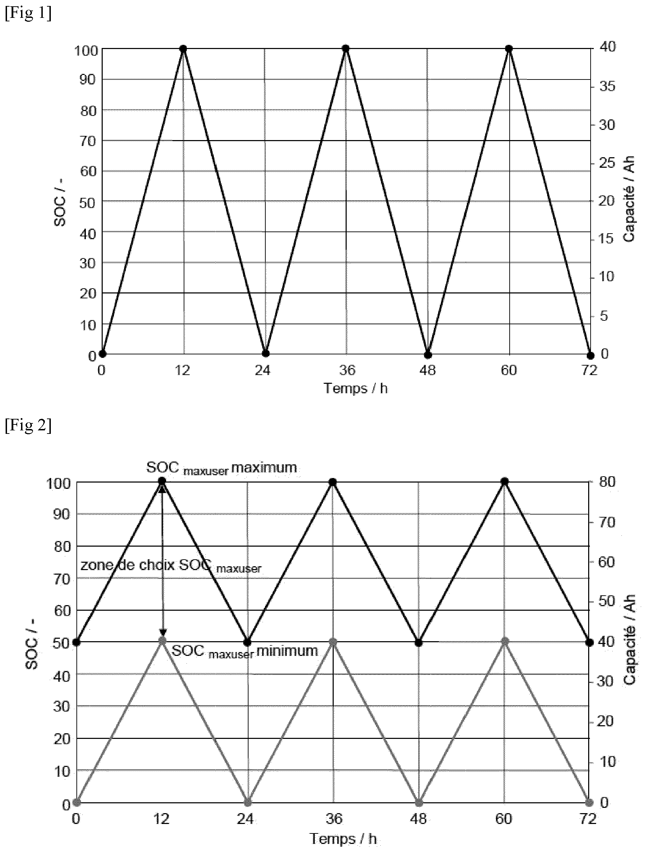

Pour un accumulateur non surdimensionné le profil d'usage peut être celui illustré en figure 1, représentant une évolution sur 72 heures, pouvant se reproduire tous les jours.

Dans le cas d'un accumulateur non surdimensionné il n'y a aucune marge de manoeuvre pour la définition du $SOC_{max\_user}$ et $SOC_{max\_user} = SOC_{max\_BMS}$. La présente invention n'est donc pas intéressante dans ce cas de figure.

La présente invention repose sur le fait de pouvoir être en mesure d'assurer un service identique au service initial sur plusieurs années et ce malgré le vieillissement d'accumulateur. L'accumulateur est donc surdimensionné à l'origine pour garantir ce fonctionnement. Dans le présent exemple, il est prévu un surdimensionnement de 50%.

Il convient donc de fixer $SOC_{max\_user}$ entre $SOC_{max\_user} = SOC_{max\_BMS}$ qui correspond à la valeur max utilisable et $SOC_{max\_user} = 50\%$ qui correspond à la valeur min que l'on peut fixer. En dessous de cette valeur le système ne pourra pas fournir la capacité nécessaire au service voulu par l'application.

La figure 2 illustre ainsi le profil de l'évolution du SOC en fonction du temps dans le cadre d'un accumulateur surdimensionné et les bornes dans lesquelles on cherche à positionner le paramètre $SOC_{max\_user}$

Le paramètre $SOC_{max\_user}$ étant préalablement borné, il convient de choisir au mieux sa valeur pour bénéficier d'un vieillissement minimum et, pour se faire, estimer le vieillissement moyen par pas de paramètre SOC.

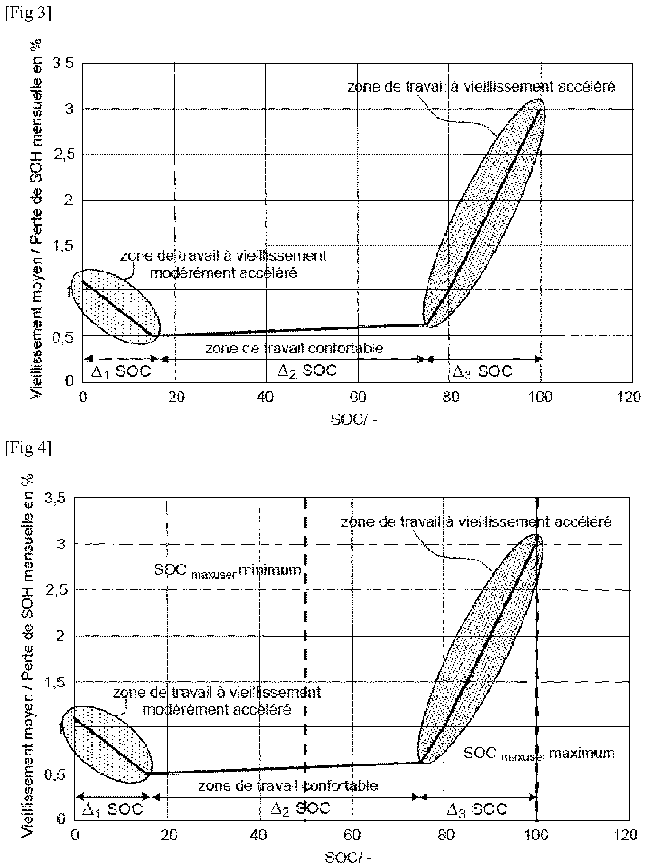

La figure 3 illustre à cet effet, la dépendance du paramètre de vieillissement pour chaque valeur de paramètre SOC. Plus précisément, on détermine un paramètre moyen de vieillissement de l'accumulateur concerné dans des conditions prédéterminées par exemple en tenant compte d'une perte d'état de santé pouvant être mensuelle.

Il ressort de la courbe illustrée en figure 3, que dans certaines gammes de SOC, on distingue différents comportements conduisant à conclure à :

- une zone de travail définie entre un $SOC_{min}$ et un $SOC_{max}$ à vieillissement modérément accéléré soit sur un intervalle $\Delta_1 SOC$ ;

- une zone de travail confortable avec peu de variation dans le paramètre suivi : vieillissement moyen/perte de SOH dans des conditions prédéterminées par exemple mensuelles soit sur un intervalle $\Delta_2 SOC$ ;

- une zone de travail à vieillissement accéléré présentant des variations fortes en termes de paramètre suivi : vieillissement moyen/perte de SOH dans des conditions prédéterminées par exemple mensuelles soit sur un intervalle $\Delta_3 SOC$.

On peut alors reporter sur la courbe de la figure 3, la valeur de $SOC_{max\_user}$ minimum et la valeur de $SOC_{max\_user}$ maximum, soit dans le cas présent respectivement 50 et 100 permettant d'obtenir la courbe d'évolution illustrée en figure 4. En se mettant à $SOC_{max\_user}$ maximum on voit clairement que l'on va travailler dans la zone de travail à vieillissement accéléré et si l'on se positionne à $SOC_{max\_user}$ minimum on va la aussi aller travailler dans la zone de travail à vieillissement modérément accéléré en fin de décharge maximale, ces zones étant clairement deux zones à éviter.

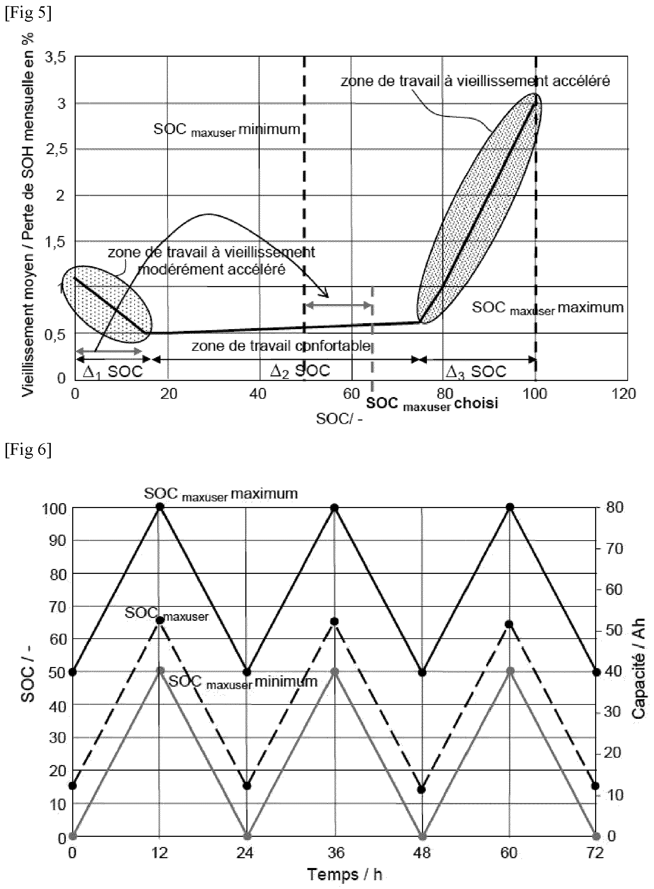

Au vu de la courbe, le meilleur choix de $SOC_{max\_user}$ va se situer à $SOC_{max\_user}$ minimum + la valeur du SOC la plus élevée correspondant à la zone de travail à vieillissement modérément accéléré, soit encore : $SOC_{max-user}$ choisi = $SOC_{max-user}$ min + $\Delta_1 Soc$ montré sur la figure 5.

Ainsi le profil de sollicitation peut être celui illustré en figure 6 relatif à l'évolution du paramètre SOC en fonction du temps, basé sur le paramètre $SOC_{max\_user}$ choisi défini précédemment.

Avec cette façon de procéder il est possible de définir une valeur optimale choisie pour le paramètre $SOC_{max\_user}$ permettant de limiter les dégradations liées au vieillissement tout en continuant de fournir le service lié à l'application.

En synthèse, il apparait que la marge entre le paramètre $SOC_{min}$ lié à ce paramètre $SOC_{max\_user}$ et le $SOC_{min\_BMS}$, peut être suivant les cas relativement faible. Il est possible que le gestionnaire du système demande à avoir une marge en fin de décharge un peu plus importante. Dans cette façon de procéder, on définira un $SOC_{min\_user}$ uniquement lié à la marge que veut prendre le gestionnaire et de fait le $SOC_{max\_user}$ sera ensuite imposé par le profil applicatif.

Afin de vérifier les gains potentiels apportés par la solution objet de la présente invention, plusieurs simulations ont été réalisées au moyen d'un modèle de vieillissement permettant l'estimation de la dégradation d'un accumulateur soumis à une sollicitation électrique, les résultats obtenus permettant de comparer entre chaque simulation, le SOH estimé ainsi que le service rendu par l'accumulateur.

Il est à noter que le service rendu d'un accumulateur peut être quantifié par la quantité d'Ah effectivement transitée au cours du temps $Q_{th\_calc}$ dans l'accumulateur par rapport à la quantité d'Ah attendue par l'application à alimenter $Q_{th}$. Si les deux quantités d'Ah diffèrent au cours du temps, alors l'accumulateur a fait défaut sur un ou plusieurs points du profil de sollicitation. Dans la suite de la présente description, la comparaison des évolutions des paramètres $Q_{th\_calc}$ et $Q_{th}$ permettra de déterminer, vis-à-vis des stratégies de gestions envisagées, si le service a bien été rendu ou non.

Exemples d'un système surdimensionné de 50%.

Ce surdimensionnement est relativement important mais peut être utilisé dans des produits où la maintenance est impossible et où la durée de vie est très importante par exemple un satellite. On part, dans cet exemple, sur un accumulateur de capacité initiale de 74.4 Ah avec un besoin journalier en énergie de 37.2 Ah (50% de surdimensionnement).

Cas 1 :

Le premier cas présenté correspond à un fonctionnement traditionnel sans gestion particulière. La recharge est suffisante pour compenser complètement la décharge sur un jour et donc en début de vie ledit système fonctionne entre 100 et 50% de SOC.

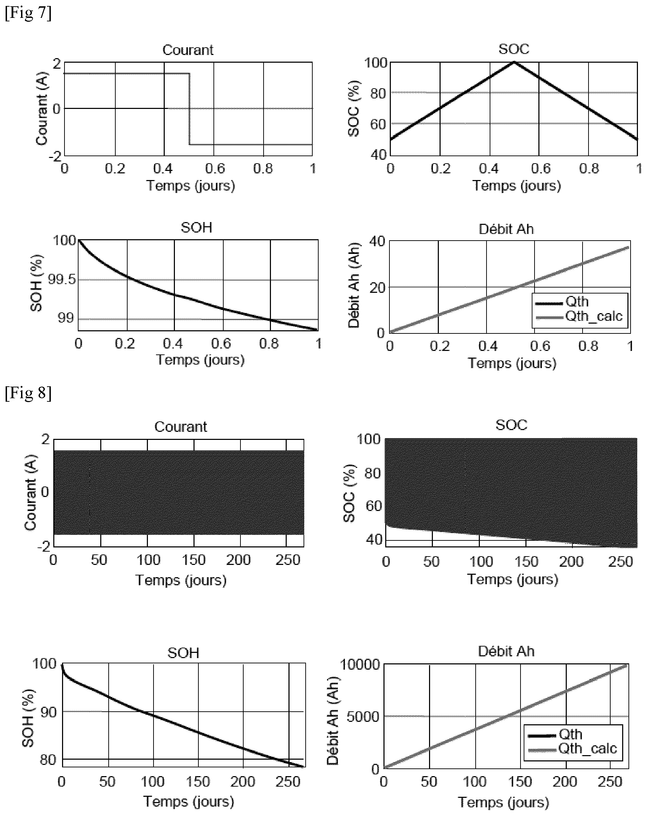

La figure 7 présente un exemple de résultat de simulation d'un profil d'une journée. Ce profil est constitué d'une charge variant de SOC=50% à SOC=100% puis d'une décharge variant de SOC=100% à SOC=50%. Le paramètre SOH passe de SOH=100% à SOH=98.8% en fin de journée. Cette simulation a été réalisée sans stratégie de gestion $SOC_{min} = SOC_{min\_user} = SOC_{min\_BMS} = 0\%$ et $SOC_{max} = SOC_{max\_user} = SOC_{max\_BMS} = 100\%$. On remarque que le service rendu par l'accumulateur est de 37.2 Ah pour un service attendu de 37.2Ah, signe que l'accumulateur n'a pas fait défaut (Qth_calc est superposée à Qth).

Cas 2 :

La figure 8, présente le résultat de simulation du même profil journalier répété sur une année d'utilisation de l'accumulateur.

On remarque que les résultats présentés sont stoppés à 266 jours. En effet, il s'agit de la limite de définition du modèle de vieillissement utilisé pour réaliser la simulation à SOH = 78%. Au cours de la simulation, on remarque que le SOC bas dérive de SOC=50% à SOC=36%. Ceci est dû à la dégradation progressive de l'accumulateur couplé au besoin d'énergie qui reste fixe au cours du temps. Le service rendu par l'accumulateur est à nouveau celui attendu par l'application et cela restera vrai tant que le seuil de $SOC_{min} = SOC_{min\_user} = SOC_{min\_BMS} = 0\%$ n'est pas atteint en cours de cyclage.

Cas 3 :

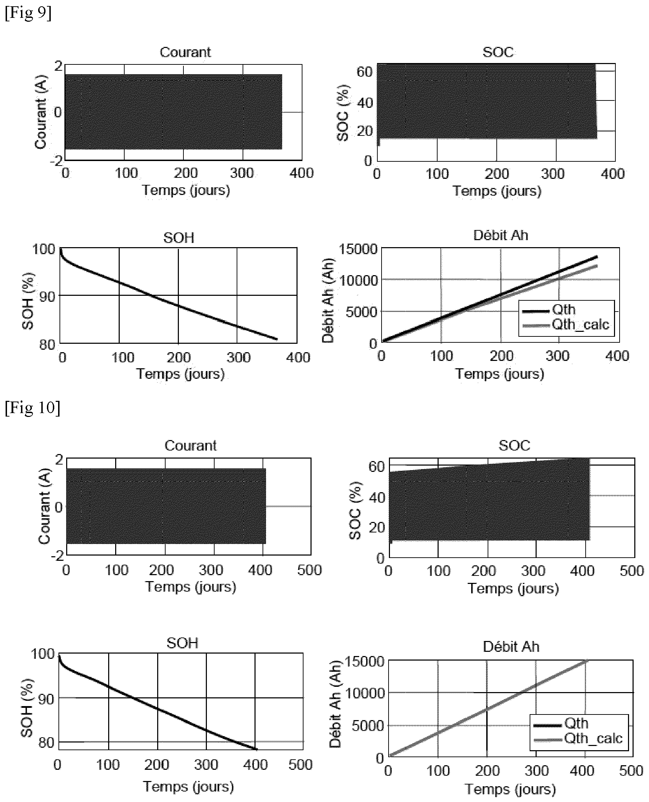

Afin d'améliorer le vieillissement, il peut être envisagé de brider les valeurs de $SOC_{min}$ et de $SOC_{max}$ , par exemple en déterminant : $SOC_{min} = 15\%$ et $SOC_{max} = 65\%$. La figure 9 présente le résultat d'une simulation sur le même profil annuel mais bridé par les limites de SOC imposées et donc bridées par ce type de stratégie de gestion. On remarque que le SOC est bien limité entre les bornes précédemment définies et que, comme attendu, le vieillissement est bien meilleur que dans le cas précédent. En revanche, on observe une différence croissante au cours du temps entre Qth et Qth_calc, signe que le service rendu n'est pas celui attendu dans le cadre de l'application visée. En effet les valeurs de SOC étant bornées de manière fixe et la quantité d'énergie attendue étant fixe, avec le vieillissement on limite ainsi ce que fournit le système et on ne répond ainsi plus au besoin (Qth_calc est n'est plus superposée à Qth).

Cas 4 :

La figure 10 présente un résultat de simulation sur le même profil avec $SOC_{min} = 15\%$ et le paramètre $SOC_{max}$ défini par l'équation (3) correspondant au procédé de gestion de la présente invention. On remarque avec la stratégie de gestion de la présente invention, par comparaison au résultat précédent, que la limite basse de SOC est fixe alors que la limite haute de SOC est variable et fonction du SOH. L'évolution du SOH est sensiblement identique au cas précédent mais le service rendu est amélioré et identique au service attendu.

Le procédé de gestion de la présente invention est basé sur une bonne connaissance des indicateurs d'état de l'accumulateur, à savoir le SOC et le SOH. Il s'agit de gestion de l'accumulateur et les indicateurs sont calculés par ailleurs par le BMS et présente une bonne fiabilité.

Il est à noter que les exemples précédents avec un surdimensionnement de 50% ont été donnés pour une décharge fixe. Le même procédé de gestion que celui décrit dans le cas 4 peut également être appliqué quelle que soit la quantité d'Ah déchargée en considérant toutefois qu'elle sera toujours inférieure ou égale à la décharge max ayant servi à dimensionner le système à l'instant initial.

**Revendications**

1. Procédé de gestion de l'état de charge d'un accumulateur couplé à un système de contrôle de l'accumulateur (BMS), l'état de charge étant limité à une valeur inférieure à un état de charge maximal ($SOC_{max}$) **caractérisé en ce qu'**il comporte l'ensemble des étapes suivantes réitérées au cours du temps de manière à faire évoluer au cours du temps ledit état de charge maximal :

   - la détermination de l'état de santé ($SOH(t)$) dudit accumulateur à un instant t ;
   - la détermination de l'état de charge maximal défini par un utilisateur $SOC_{max-user}$,
   et **en ce que** l'étape de détermination de l'état de charge maximal défini par l'utilisateur comprend :

   o la détermination d'un profil d'usage exprimé par le paramètre d'état de charge SOC au cours du temps ;
   o la détermination d'un surdimensionnement dudit accumulateur par rapport à un besoin initial d'usage, de manière à définir une valeur minimum du paramètre $SOC_{max-user}$, la valeur maximal du paramètre $SOC_{max-user}$ étant égale à l'état de charge maximal définie dans le système de contrôle de l'accumulateur $SOC_{max-BMS}$ ;
   o la détermination périodique du rapport du vieillissement moyen/perte de l'état de santé SOH dudit accumulateur en fonction du paramètre de l'état de charge SOC définissant par valeurs de l'état de charge SOC croissantes au moins :

   ▪ une zone de travail à vieillissement modérément accéléré sur un intervalle $\Delta_1 SOC$ ;
   ▪ une zone intermédiaire de travail confortable avec faibles variations de paramètres de vieillissement sur un intervalle $\Delta_2 SOC$, la valeur $SOC_{max-user}$ minimum étant comprise dans ledit intervalle ;
   ▪ une zone de travail à vieillissement accéléré sur un intervalle $\Delta_3 SOC$ ;

   ○ la détermination d'une valeur de $SOC_{max-user}$ défini par l'équation :

   $$SOC_{max-user} = SOC_{max-user\,min} + \Delta_1 SOC$$

   - la détermination de l'état de charge maximal $SOC_{max}(t)$ en fonction dudit état de santé $SOH(t)$ selon l'équation suivante :

   $$SOC_{max}(t) = min(SOC_{max-user} + 100 - SOH(t), SOC_{max-BMS}).$$

2. Procédé de gestion selon la revendication 1, dans lequel l'état de santé en terme de charge $SOH(t)$ est déterminé par le système de contrôle de l'accumulateur (BMS).

3. Procédé de gestion selon la revendication 2, dans lequel l'état de santé en terme de charge $SOH(t)$ est déterminé :

   - par comptage coulométrique, permettant de déterminer sur un cycle complet pouvant être défini comme étant une charge/décharge avec un paramètre SOC balayant des valeurs strictement comprises entre 0 et 100%, la valeur de la capacité de l'accumulateur à l'instant t ;
   - par comparaison de ladite capacité à l'instant t avec ladite capacité en début de vie.

4. Procédé de gestion selon l'une des revendications précédentes, dans lequel la détermination périodique du rapport du vieillissement moyen/perte de l'état de santé SOH en fonction du paramètre SOC est effectuée mensuellement.

5. Procédé de gestion selon l'une des revendications 1 à 3, dans lequel l'accumulateur est surdimensionné avec un facteur de surdimensionnement dépendant du profil d'usage.

**Patentansprüche**

1. Verfahren zur Verwaltung des Ladezustands eines Akkumulators, der mit einem Steuerungssystem für den Akkumulator (BMS) gekoppelt ist, wobei der Ladezustand auf einen Wert unterhalb eines maximalen Ladezustands ($SOC_{max}$) begrenzt ist, **dadurch gekennzeichnet, dass** es sämtliche der folgenden Schritte aufweist, die im Laufe der Zeit wiederholt werden, so dass sich der maximale Ladezustand im Laufe der Zeit entwickelt:

   - das Bestimmen des Gesundheitszustands (SOH(t)) des Akkumulators zu einem Zeitpunkt t;
   - das Bestimmen des von einem Benutzer definierten maximalen Ladezustands $SOC_{max-user}$;
   und dadurch, dass der Schritt des Bestimmens des durch den Benutzer definierten maximalen Ladezustands Folgendes umfasst:

   ○ das Bestimmen eines Nutzungsprofils, das durch den Parameter des Ladezustands SOC im Laufe der Zeit ausgedrückt wird;
   ○ das Bestimmen einer Überdimensionierung des Akkumulators in Bezug auf einen anfänglichen Nutzungsbedarf, um einen Mindestwert des Parameters $SOC_{max-user}$ zu definieren, wobei der Höchstwert des Parameters $SOC_{max-user}$ gleich dem im Steuerungssystem des Akkumulators definierten maximalen Ladezustand $SOC_{max-BMS}$ ist.
   ○ das periodische Bestimmen des Verhältnisses der durchschnittlichen Alterung/des Verlusts des Gesundheitszustands SOH des Akkumulators in Abhängigkeit von dem Parameter des Ladezustands SOC, der durch ansteigende Werte des Ladezustands SOC mindestens folgende Elemente definiert:

   ▪ einen Arbeitsbereich mit mäßig beschleunigter Alterung über ein Intervall $\Delta_1 SOC$;
   ▪ einen komfortablen Zwischenarbeitsbereich mit geringen Variationen von Alterungsparametern über ein Intervall $\Delta_2 SOC$, wobei der minimale Wert von $SOC_{max-user}$ in dem Intervall liegt;
   ▪ einen Arbeitsbereich mit beschleunigter Alterung über ein Intervall $\Delta_3 SOC$;

   ○ das Bestimmen eines Wertes von $SOC_{max-user}$, der durch folgende Gleichung definiert ist:

$$SOC_{\text{max-user}} = SOC_{\text{max-user min}} + \Delta_1\, SOC\ ;$$

   - das Bestimmen des maximalen Ladezustands $SOC_{max}(t)$ in Abhängigkeit von dem Gesundheitszustand SOH(t) gemäß folgender Gleichung:

$$SOC_{\text{max}}(t) = \min(SOC_{\text{max-user}} + 100 - SOH(t),\ SOC_{\text{max-BMS}}).$$

2. Verwaltungsverfahren nach Anspruch 1, wobei der Gesundheitszustand in Bezug auf Ladung SOH(t) durch das Steuerungssystem des Akkumulators (BMS) bestimmt wird.

3. Verwaltungsverfahren nach Anspruch 2, wobei der Gesundheitszustand in Bezug auf Ladung SOH(t) wie folgt bestimmt wird:

   - durch coulometrisches Zählen, das es ermöglicht, über einen vollständigen Zyklus, der als eine Ladung/Entladung mit einem Parameter SOC definiert werden kann, der Werte streng zwischen 0 und 100 % abtastet, den Wert der Kapazität des Akkumulators zum Zeitpunkt t zu bestimmen;
   - durch Vergleichen der Kapazität zum Zeitpunkt t mit der Kapazität am Anfang der Lebensdauer.

4. Verwaltungsverfahren nach einem der vorhergehenden Ansprüche, wobei das periodische Bestimmen des Verhältnisses von durchschnittlicher Alterung/des Verlusts des Gesundheitszustands SOH in Abhängigkeit von dem Parameter SOC monatlich durchgeführt wird.

5. Verwaltungsverfahren nach einem der Ansprüche 1 bis 3, wobei der Akkumulator mit einem vom Nutzungsprofil abhängigen Überdimensionierungsfaktor überdimensioniert ist.

**Claims**

1. A method for managing the state of charge of an accumulator coupled to a system for controlling the accumulator (BMS), the state of charge being limited to a value lower than a maximum state of charge ($SOC_{max}$), **characterized in that** it involves all the following steps repeated over time so as to cause said maximum state of charge to evolve over time:

   - determining the state of health (SOH(t)) of said accumulator at an instant t;
   - determining the maximum state of charge defined by a user $SOC_{max-user}$; and **in that** the step of determining the maximum state of charge defined by the user comprises:

      ◦ determining a usage profile expressed by the parameter of the state of charge SOC over time;
      ◦ determining an overdimensioning of said accumulator relative to an initial usage requirement, so as to define a minimum value of the parameter $SOC_{max-user}$, the maximum value of the parameter $SOC_{max-user}$ being equal to the maximum state of charge defined in the control system of the accumulator $SOC_{max-BMS}$;
      ◦ periodically determining the ratio of the average ageing to the loss of the state of health SOH of said accumulator depending on the parameter of the state of charge SOC defining, by increasing values of the state of charge SOC, at least:

         ▪ a moderately accelerated ageing working area over an interval $\Delta_1 SOC$;
         ▪ a comfortable intermediate working area with small variations in ageing parameters over an interval $\Delta_2 SOC$, the minimum value of $SOC_{max-user}$ ranging within said interval;
         ▪ an accelerated ageing working area over an interval $\Delta_3 SOC$;

      ◦ determining a value of $SOC_{max-user}$ that is defined by the equation:

$$SOC_{max\text{-}user} = SOC_{max\text{-}user\,min} + \Delta_1 SOC;$$

   - determining the maximum state of charge $SOC_{max}(t)$ depending on said state of health SOH(t) according to the following equation:

$$SOC_{max}(t) = min(SOC_{max\text{-}user} + 100 - SOH(t), SOC_{max\text{-}BMS}).$$

2. The management method as claimed in claim 1, wherein the state of health in terms of charge SOH(t) is determined by the control system of the accumulator (BMS).

3. The management method as claimed in claim 2, wherein the state of health in terms of charge SOH(t) is determined:

   - by coulometric counting, allowing the value of the capacitance of the accumulator at the instant t to be determined over a complete cycle, which can be defined as being a charge/discharge with a SOC parameter scanning values strictly ranging between 0 and 100 %;
   - by comparing said capacitance at the instant t with said capacitance at the start of life.

4. The management method as claimed in any of the preceding claims, wherein the periodic determining of the ratio of the average ageing to the loss of the state of health SOH depending on the SOC parameter is carried out monthly.

5. The management method as claimed in any of claims 1 to 3, wherein the accumulator is overdimensioned with an overdimensioning factor depending on the usage profile.

[Fig 1]

[Fig 2]

[Fig 3]

[Fig 4]

[Fig 5]

[Fig 6]

[Fig 7]

[Fig 8]

[Fig 9]

[Fig 10]

**EP 4 009 480 B1**

**Documents brevets cités dans la description**

- US 20040066171 A1
- FR 3025663 A1
- US 2011221400 A1
- US 2011156644 A1
- US 2013027048 A1
- WO 2019121756 A
- FR 1362456
- FR 1362458